# EUROPEAN PATENT APPLICATION

(11) **EP 4 737 337 A2**
(43) Date of publication of application: **06.05.2026**
(21) Application number: 25212377.3
(22) Date of filing: 30.10.2025
(51) Int. Cl.: B65B 57/00, G05B 19/41

(54) **A METHOD FOR OPERATING AN ACTUATOR OF A PACKAGING MACHINE AND AN APPARATUS THEREOF**

(30) Priority: 01.11.2024 EP 24210327
(71) Applicant: Tetra Laval Holdings & Finance S.A., 1009 Pully (CH)
(72) Inventor: Östenson, Toni, 221 86 Lund (SE)
(74) Representative: Tetra Pak Patent Attorneys

(57) **Abstract**

A method (S100) for operating an actuator (102) in a packaging machine (100) producing food-filled packages is disclosed. The actuator moves a package precursor (106) along a motion axis (M-A) based on a movement profile (200). The method involves: obtaining (S102) package-specific data (400), including package status (402), from a connected database (112); obtaining (S104) a start position (300a-306a, 702a) on the motion axis; determining (S106) an end position (300b-306b, 702b) based on package status (402); defining (S108) a package precursor-adjusted movement profile by scaling (S110) the movement profile according to the start and end positions; and initiating (S112) actuator movement from start to end along the motion axis according to the adjusted movement profile.

## Description

### Technical Field

The invention relates to packaging technology. More particularly, it is related to a method for operating an actuator in a packaging machine, and an apparatus for operating an actuator.

### Background Art

During the last couple of decades, packaging machines have become more and more advanced. There are several reasons for this transformation. One reason is cost-efficiency. By being able to produce more packages per hour, cost per package can be lowered, in turn providing the possibility to increase margins both for the food producer as well as the retailer. Another reason is that food safety regulations have been made more and more strict over the years. In order to deliver on the food safety regulations of today, high standards of the operation of the packaging machine should be fulfilled. Still a reason for the increased complexity of the packaging machines is that the standards related to the appearance of the packages have been tightened. Put differently, what may have passed as sufficient a couple of decades ago may not be considered fulfilling today's standards. For instance, a slightly incorrectly folded carton package that was considered to meet the standards a couple of decades ago may be considered out of specification, i.e., not fulfilling the standards, today. All in all, the increased requirements on the output of the packaging machines have resulted in that the requirements on the package machines have increased.

An effect of that the requirements of the packaging machines have increased is that also the standards of the components used in the packaging machines have increased. One such component forming part of most packaging machines of today is actuators, e.g., servomotors. The actuators may be used for a wide range of different purposes in the packaging machines. For instance, the actuators may be used for picking blanks from a magazine. Further, they may be used for lowering the package during a filling process such that food product can be filled into the package time efficiently. They may also be used for grouping packages in a cardboard packer, i.e., a piece of equipment used for forming a secondary package of cardboard holding a group of packages, in this context often referred to as primary packages.

Servomotors and other types of actuators have developed over the years both in terms of accuracy as well as reliability. By way of example, a distance the servomotor is set to move from one position to another may be set more precisely. Regarding reliability, the servomotors of today are more reliable over time compared to their predecessors. In addition, deviations between different servomotors are also not as prominent today compared to a couple of decades ago.

Even though the components used in the packaging machines of today have improved, there is nevertheless room for improvement with respect to the operation of the packaging machine. More particularly, by being able to control the operation of the actuators of the packaging machine on a more granular level, the overall operation of the packaging machine can be further improved.

### Summary

It is an object of the invention to at least partly overcome one or more of the above-identified limitations of the prior art. In particular, it is an object to provide a method for operating an actuator of a packaging machine such that package precursor specific deviations can be compensated for. For instance, by being able to compensate for package status of an individual blank, which is an example of the package precursor, it is made possible to control the operation of both the actuator as well as the packaging machine as a whole in an improved manner.

According to a first aspect it is provided a method for operating an actuator of a packaging machine arranged to produce packages filled with food product, wherein the actuator is arranged to move a package precursor between a number of positions along a motion axis according to a movement profile, wherein the package precursor is arranged to be formed into one of the packages in the packaging machine, said method comprising
obtaining package-specific data associated with the package precursor held in a database communicatively connected to the packaging machine, wherein the package-specific data comprises information about package status,
obtaining a start position on the motion axis,
determining an end position on the motion axis based on the package status,
defining the movement profile based on the start and end position into a package precursor-adjusted movement profile by scaling the movement profile based on a distance between the start position and the end position, and
initiating a movement of the actuator from the start position to the end position along the motion axis in accordance with the package precursor-adjusted movement profile.

By using this approach it is made possible to use a so-called one cycle approach, that is, each package precursor is handled separately. A benefit of applying this approach is that a more responsive package machine may be achieved. For instance, in case the package status associated with a specific package precursor is amended, the packaging machine may adapt to this amendment even though only being related to one specific package precursor.

The movement profile may a pre-defined movement profile, e.g., a normalized movement profile adapted in accordance with properties of the actuator.

The distance between the start position and the end position may be an aggregate comprising a machine default set distance, an operator-adjusted start position and an operator-adjusted end position.

As used herein, "aggregate" may refer to a combined or composite value that represents the total distance between the start and end positions of the actuator's movement in the packaging machine. This aggregate distance may be calculated by considering multiple contributing factors, such as: i) machine default set distance (the standard, preset distance defined by the machine's default configuration), ii) operator-adjusted start and end positions (any adjustments made by the operator to the start or end positions to account for deviations, wear, or other operational requirements), and iii) package-specific data (e.g., length deviation; adjustments based on specific characteristics or dimensions of each package precursor).

By having the machine default set distance and allowing this to be adjusted by the operator in the start position and the end position, it is made possible for the operator to adjust settings such that any deviation related to e.g., wear of the packaging machine may be compensated for easily.

The package-specific data may comprise a length deviation of the package precursor, wherein the aggregate may further comprise the length deviation, wherein the actuator may form part of a sealing station of the packaging machine, wherein the start position may be a conveyor belt position and the end position may be a sealing position in which the package precursor is held in position while a transversal sealing in a sealing section of the package precursor is formed.

By considering the length deviation, it is made possible to control the sealing process in a more detailed manner, thereby improving sealing quality.

The operator-adjusted start position and/or the operator-adjusted end position may be restricted by an adjustment window, wherein the adjustment window defines a maximum allowed deviation from the start position and/or the end position.

By having the window, a risk for incorrect adjustments made by the operator can be reduced.

The package status may comprise information about whether the package precursor is to be wasted.

The package precursor may be a blank of a web of packaging material, wherein the package status is set to be wasted if the blank is provided with a weld from an automatic splicing operation.

The method may further comprise
determining an intermediate position on the motion axis,
wherein the step of defining the movement profile comprises
defining the movement profile based on the start and intermediate position into a first movement profile by scaling the movement profile from a positional perspective and a temporal perspective based on a distance between the start and the intermediate position,
defining the movement profile based on the intermediate and end position into a second movement profile by scaling the movement profile from the positional perspective and the temporal perspective based on a distance between the intermediate and the end position, and
combining the first and second movement profile into the package-adjusted movement profile.

The actuator may be a servomotor arranged for picking up the package precursor in the form of flat-folded sleeve of packaging material from a magazine in a pick-up position, transferring the flat-folded sleeve to a folding station in a folding position, and wasting the flat-folded sleeve in a waste position, wherein the waste position is the intermediate position along the motion axis placed between the pick-up position and the folding position, wherein the package status may indicate whether the package precursor is to be transferred to the waste position or transferred to the folding station.

The package-specific data may comprise a unique identification of the package precursor and the package is provided with a physical mark associated to the unique identification.

The end position may be a start position for a subsequent package precursor to be moved by the actuator.

The steps of obtaining the package-specific data, obtaining the start position, and defining the movement profile may be performed for a sequence of package precursors such that a plurality of movement profiles are generated and merged prior to the step of initiating the movement of the actuator.

A time delay may be provided between executing the step of defining the movement profile and the step of initiating the movement of actuator.

An advantage with such time delay is that the movement profile is made in advance. This in turn provides for that a number of operations to be performed can be stacked, which in turn comes with the benefit that minor delays in the apparatus used for processing the data can be compensated for.

According to a second aspect it is provided an apparatus for operating an actuator of a packaging machine arranged to produce packages filled with food product, wherein the actuator is arranged to move a package precursor between a number of positions along a motion axis according to a movement profile, wherein the package precursor is arranged to be formed into one of the packages in the packaging machine, the apparatus comprising a control circuitry configured to
obtain package-specific data associated with the package precursor held in a database communicatively connected to the packaging machine, wherein the package-specific data comprises information about package status,
obtain a start position on the motion axis,
determine an end position on the motion axis based on the package status,
define the movement profile based on the start and end position into a package precursor-adjusted movement profile by scaling the movement profile based on a distance between the start position and the end position, and
initiate a movement of the actuator from the start position to the end position along the motion axis in accordance with the package per-cursor-adjusted movement profile.

The same features and advantages as presented with respect to the first aspect also apply to this second aspect.

According to a third aspect it is provided a computer program product comprising instructions which, when executed by a computing device, causes the computing device to carry out the method according to the first aspect.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 illustrates by way of example a servomotor arranged to pick up a blank from a magazine in a pick-up position, to fold the blank in a folding position and to waste the blank in a waste position.
Fig. 2 illustrates a movement profile, sometimes referred to as a CAM profile, describing the movement of the servomotor illustrated in Fig. 1.
Fig. 3 illustrates how the movement profile illustrated in Fig. 2 can be generated by scaling and combining normalized CAM profiles.
Fig. 4 illustrates by way of example package-specific data.
Fig. 5 is a state flow diagram describing the operation of the servomotor.
Fig. 6 illustrates a sequence of package precursors, wherein a sub-set of these comprises a weld.
Fig. 7A and 7B illustrate a transversal sealing station in a conveyor belt position and a sealing position, respectively.
Fig. 8 is a flowchart illustrating a method for operating the actuator of the packaging machine.

### Detailed Description

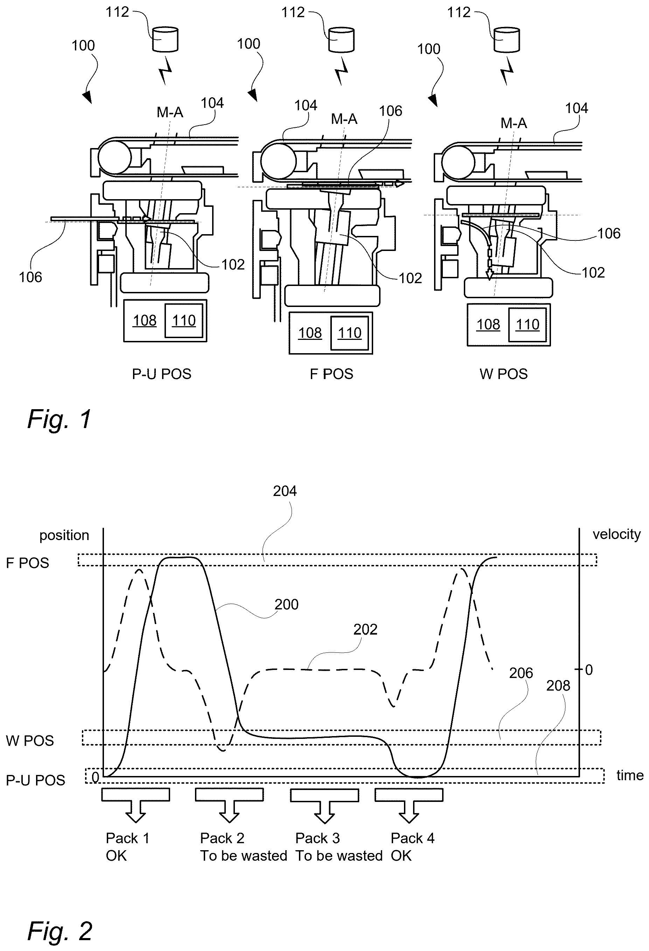

Fig. 1 illustrates by way of example a part of a packaging machine 100, e.g., a carton gable top packaging machine, such as Tetra Rex^{™} machine provided by Tetra Pak^{™}. As illustrated, an actuator 102 in the form of a servomotor may be arranged to pick up a package precursor 106, herein in the form of a blank, e.g. a flat-folded sleeve of packaging material, from a magazine in a pick-up position P-U POS, illustrated to the left, to fold the package precursor 106 in a folding position F POS, illustrated in a midsection of Fig. 1, and to waste the package precursor 106 in a waste position W POS, illustrated to the right.

The actuator 102 is arranged to move along a motion axis M-A such that the three different positions illustrated - the pick-up position P-U POS, the folding position F POS and the waste position W POS - can be reached. In the pick-up position P-U POS the actuator 102 may be arranged such the blank can be received from the magazine. Once the blank has been received in the pick-up position P-U POS the actuator may be arranged such that this is moved into the folding position F POS. In this position, the blank can be folded by using a conveyor belt 104. This folding may involve that the blank, being the flat-folded sleeve, is erected into an open sleeve, i.e., a sleeve with a rectangular cross-section. In case the blank is not considered to meet set quality requirements, the actuator 102 may be placed in the waste position W POS instead of the pick-up position P-U POS. As illustrated, by having the waste position W POS placed between the pick-up position P-U POS and the folding position F POS, this may result in that the blank is retrieved from the magazine without being picked up, i.e., not processed further in the packaging machine 100.

As illustrated, an apparatus 108 comprising control circuitry 110 may be provided for controlling operation of the actuator 102. In addition, a database 112 may be provided such that information about package status, e.g., whether the blank is to be picked up or wasted, can be provided. The database 112 may be comprised as an integral part of the packaging machine 100, but it may also be remotely placed and communicatively connected to the packaging machine 100.

Fig. 2 is a diagram illustrating a movement profile 200 of the actuator 102 illustrated by way of example. In addition to the movement profile 200, which may be seen as a position curve, a velocity curve 202 is also provided such that both position and velocity is displayed for each time point. As illustrated, the pick-up position P-U POS may be assigned as a reference position, i.e., position 0, and the waste position W POS slightly above, and the folding position F POS above the waste position W POS, in correspondence with Fig. 1. The movement profile 200 illustrated in the example of Fig. 2 relates to four package precursors. A first package precursor "Pack 1" is provided with the package status "OK", i.e. to be transferred from the pick-up position P-U POS to the folding position F POS, a second and a third package precursors "Pack 2" and "Pack 3" are both provided with the package status "To be wasted", and a fourth package precursor "Pack 4" is provided with the package status "OK". As illustrated, based on the information provided via the package status of the different package precursors to be handled, the movement profile may be defined accordingly. For the first package precursor "Pack 1", this implies that the actuator will be moved from the pick-up position P-U POS to the folding position F POS, which is a start position for this package precursor will be the P-U POS and an end position will be the folding position F POS. For the second package precursor "Pack 2", the start position will be the folding position F POS, since this is the end position of the first package precursor "Pack 1", and the end position of the second package precursor will be the waste position W POS, since the package status linked to the second package precursor "Pack 2" is "To be wasted". For the third package precursor "Pack 3", the start position will be the waste position W POS and this position will also be the end position since the package status for this package precursor is also "To be wasted". For the fourth package precursor "Pack 4", the start position will be the waste position W POS, and the end position will be the folding position F POS. However, since the package precursor is to be picked up in the pick-up position P-U POS before this is folded in the folding position F POS, an intermediate position is introduced, and in this particular example, this is the pick-up position P-U POS.

As illustrated, three adjustment windows are illustrated; a folding position adjustment window 204, a waste position adjustment window 206 and a pick-up position adjustment window 208. Within these windows, an operator may be allowed to adjust the position. In other words, the adjustment windows define a maximum allowed deviation from the start position and/or the end position. By having these windows, it is made possible for the operator to easily adjust settings of the actuator 102. For instance, after having run the packaging machine 100 for a number of hours, it may be that the folding position F POS needs to be adjusted by the operator to make sure that the package precursor 102 can be adequately attached to the conveyor belt 104 in the folding position F POS. As a consequence of allowing the operator to adjust, a distance between the start position and the end position for a specific package precursor may be seen as an aggregate comprising a machine default set distance, an operator-adjusted start position and an operator-adjusted end position.

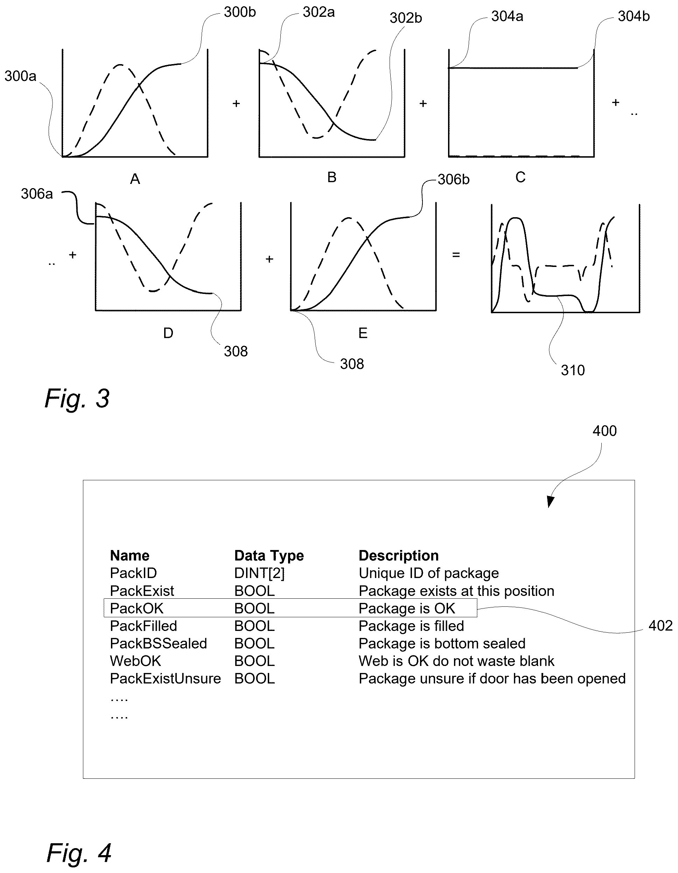

As illustrated in Fig. 3, to arrive in the movement profile 200 illustrated in Fig. 2, movement profiles for each of the package precursors may be generated and thereafter merged together before the movement of the actuator 102 is initiated. The movement profiles for the different package precursors may be based on a normalized movement profile, i.e., a movement profile adapted to the actuator 102. With this normalized movement profile at hand, this can be scaled based on a distance between the start position 300a-306a and the end position 300b-306b of one of the package precursors such that the movement profile for this is generated. Once generated, the different movement profiles for the different package precursors can be merged into the movement profile 200 for a sequence of package precursors. In the example illustrated, the movement profile A is related to the first package precursor, the movement profile B is related to the second package precursor, the movement profile C is related to the third package precursor, and the movement profile D and E are related to the fourth package precursor.

As illustrated in Fig. 3, for the fourth package precursor "Pack 4", the start position 306a is the waste position W POS and the end position 306b is the folding position F POS. The intermediate position 308 is the pick-up position P-U POS. In order to be able to handle the intermediate position and yet use the normalized movement profile, two movement profiles are used for achieving the movement profile for the fourth package precursor.

As illustrated, the scaling may both involve scaling from a positional perspective, also referred to as amplitude scaling, herein related to the y-axis, as well as from a temporal perspective, also referred to as time scaling, herein related to the x-axis. In case, the actuator 102 is only moved between two positions, i.e., no intermediate position, scaling based on the temporal perspective may not be needed, i.e., no adjustment with respect to the x-axis is needed.

As discussed above, the end position may be determined based on the package status. By way of example, as illustrated in Fig. 1, in case the package precursor 106 has the package status "To be wasted", this comes with the effect that the end position is the waste position W POS. In Fig. 4, an example of package-specific data 400 is illustrated. In this example, the package status 402 is provided with the name "PackOK" and it is a boolean value. In addition to the package status 402, the package specification data 400, in this example, comprises information about "PackID", i.e., a unique ID of the package and also the package precursor to be formed into the package. This unique identification of the package precursor 106 may be linked to a physical mark of the package, and the package precursor associated thereto. For instance, a QR code or other 2D mark linked to the unique ID may be provided on the package, or the package precursor 106.

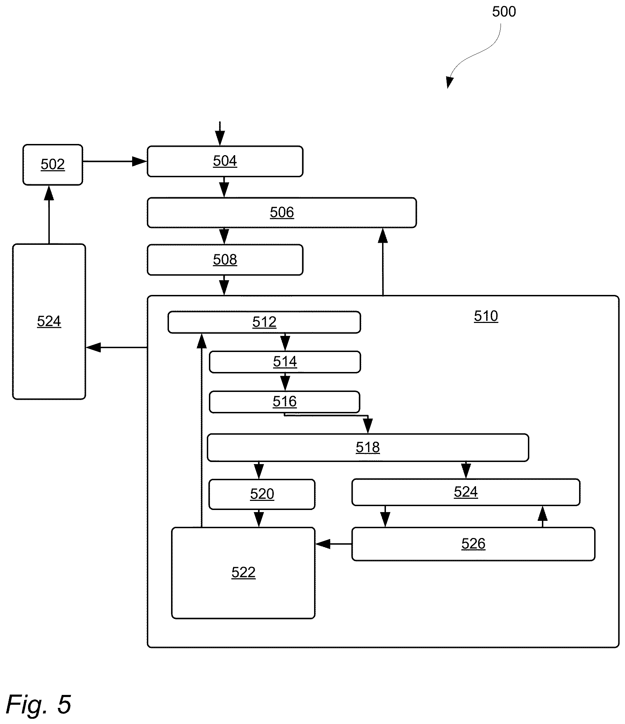

Fig. 5 is an example of a state flow diagram 500 of the actuator. In "Recover Actuator" state 502, the actuator may move to the "Actuator_OFF" state 504 once the actuator is recovered. Once safety is OK, power is ON and machine START, the actuator may move to "Actuator ON" state 506. Once the one cycle operation is prepared, the actuator may be transferred to "Actuator define Home and Go To Start position" state 508. From this state, once the actuator is homed in start position and ready for one cycle operations, the actuator may be transferred to "one cycle" state 510. Once in this state, a "Check input, Pack Array or Sensor and calculate running parameters (scaling factors)" state 512 may be entered. Once the package arrives to the actuator, the actuator is transferred to a "Transfer scaling to Normalized CAM profile" state 514. After having waited for synchronization point, the actuator may be transferred to a "start follow the CAM table" state 516, wherein the CAM table comprises number related to the CAM profile. Once the CAM is in progress, the actuator may be transferred to a "Axis is currently active following a cam table " state 518. If the axis has only one destination, that is, no intermediate position, a "Wait until CAM table is finished" state 520 is entered. Once the cycle is completed, a "Cycle completed" state 522 may be entered. On the other hand, if the axis has more than one destination, or CAM segments, in one cycle, a "Pre-load next CAM segment (assign scaling) and wait for active CAM to finish" state 524 is entered. Once the first CAM is finished, the actuator may change state to a "Run next CAM in sequence" state 526. Once this next CAM has been run and if there are additional CAM segments remaining in the cycle, the state may change back to the "Pre-load next CAM segment (assign scaling) and wait for active CAM to finish" state 524. If all CAM segments in the cycle has been executed and finished, the state may change to the "Cycle completed" state 522. In case of safety fault or power fault, the state may change from the "one cycle" state 510 to a "Stop Actuator and disable power" state 524. Once alarm is acknowledged, the state may change to the "Recover Actuator" state 502.

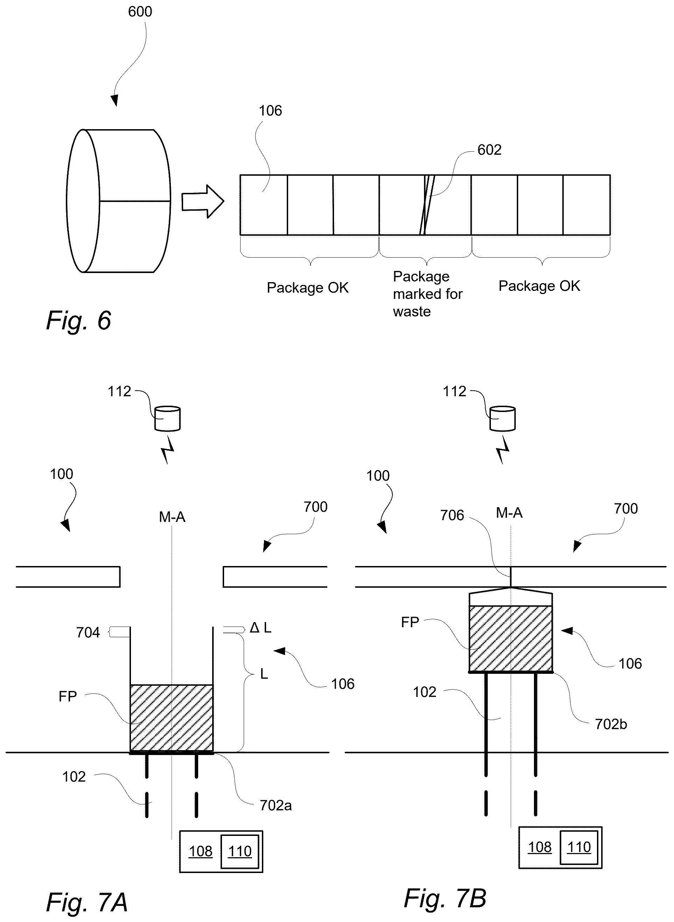

As illustrated in Fig. 1, the package precursor 106 may be a blank in the form of a flat-folded sleeve. However, the package precursor 106 is not limited to this form. As illustrated in Fig. 6, the package precursors may be delivered as a sequence of package precursors 600 in the form of a web. This web may comprise different sections that each may be formed into a package. Providing the package precursors in this way is well-known from roll-fed packaging machines, such as Tetra Brik^{™} packaging machines provided by Tetra Pak^{™}.

In line with the examples presented above, the package precursors 106 may each be associated with the package status. As illustrated, three package precursors to the left as well as the two package precursors to the right may be associated with the package status that these are OK and should be folded into packages, while the two package precursors in between are assigned with the package status that these are to be wasted. The reason for that these package precursors are to be assigned with this status is due to that there is a weld 602 from an automatic splicing operation provided on these package precursors.

In Fig. 1, the actuator 102 is used for picking up the package precursor 106 from the magazine. Fig. 7A and 7B illustrate another example of how the actuator may be used in the packaging machine 100. In these figures, a sealing station 700, more particularly a transversal sealing station, is illustrated. In the example illustrated, Fig. 7A illustrates a state in which the package precursor 106 is in a conveyor belt position, i.e., the package precursor 106 is not lifted by the actuator 102, but resting on a conveyor belt. In the example illustrated, the conveyor belt position is considered to be the start position 702a. The package precursor 106 may have a length L. Minor variations between the different package precursors may exists, and in this example there is a length deviation ΔL between a set length and an actual length of the package precursor 106. As illustrated, in a top section of the package precursor 106, a sealing section 704 is provided. In Fig. 7B, the actuator 102 has been moved from the start position to the end position, herein corresponding to a sealing position. As illustrated, in this position a transversal sealing 706, also referred to as sealing, is provided in the sealing section 704 of the package precursor 106 such that a closed package holding food product FP is formed. To compensate for the length deviation, the distance between the start position and the end position that is used for scaling the normalized movement profile may take this into account.

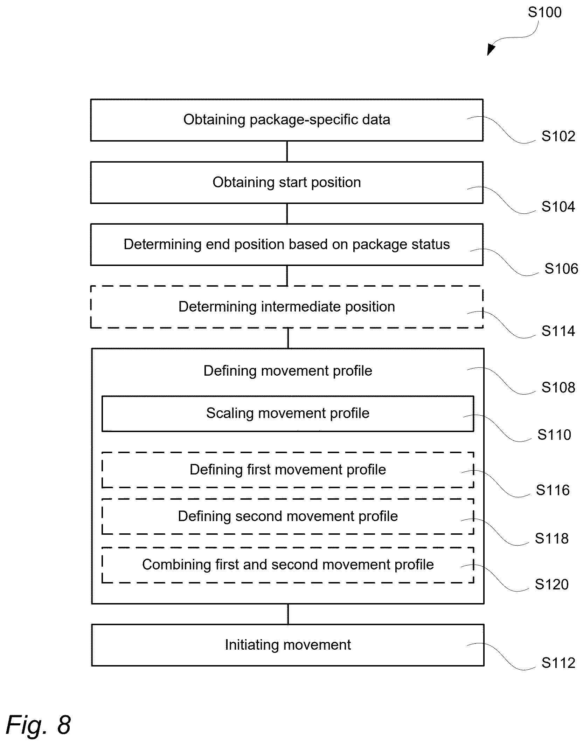

Fig. 8 is a flowchart illustrating a method S100 for operating the actuator 102 of the packaging machine 100 arranged to produce packages filled with food product. The method may comprise obtaining S102 the package-specific data associated with the package precursor 106 held in the database 122 communicatively connected to the packaging machine 100, wherein the package-specific data 400 comprises information about package status 402, obtaining S104 the start position 300a-306a, 702a on the motion axis M-A, determining S106 the end position 300b-306b, 702b on the motion axis M-A based on the package status 402, defining S108 the movement profile based on the start and end position 300b-306b into a package precursor-adjusted movement profile by scaling S110 the movement profile based on the distance between the start position and the end position, and initiating S112 a movement of the actuator 102 from the start position to the end position along the motion axis in accordance with the package precursor-adjusted movement profile.

The method may further comprise determining S114 the intermediate position 308 on the motion axis, and the step of defining the pre-defined movement profile comprises defining S116 the movement profile based on the start and intermediate position into a first movement profile by scaling the movement profile from a positional perspective and a temporal perspective based on a distance between the start and the intermediate position, defining S118 the movement profile based on the intermediate and end position into a second movement profile by scaling the movement profile from the positional perspective and the temporal perspective based on a distance between the intermediate and the end position, and combining S120 the first and second movement profile into the package-adjusted movement profile.

From the description above follows that, although various embodiments of the invention have been described and shown, the invention is not restricted thereto, but may also be embodied in other ways within the scope of the subject-matter defined in the following claims.

## Claims

1. A method (S100) for operating an actuator (102) of a packaging machine (100) arranged to produce packages filled with food product, wherein the actuator is arranged to move a package precursor (106) between a number of positions along a motion axis (M-A) according to a movement profile (200), wherein the package precursor is arranged to be formed into one of the packages in the packaging machine, said method comprising
obtaining (S102) package-specific data (400) associated with the package precursor (106) held in a database (112) communicatively connected to the packaging machine (100), wherein the package-specific data (400) comprises information about package status (402),
obtaining (S104) a start position (300a-306a, 702a) on the motion axis (M-A),
determining (S106) an end position (300b-306b, 702b) on the motion axis (M-A) based on the package status (402),
defining (S108) the movement profile based on the start and end position (300b-306b) into a package precursor-adjusted movement profile by scaling (S110) the movement profile based on a distance between the start position and the end position, and
initiating (S112) a movement of the actuator (102) from the start position to the end position along the motion axis in accordance with the package precursor-adjusted movement profile.

2. The method according to any one of the preceding claims, wherein the movement profile is a pre-defined movement profile.

3. The method according to any one of the preceding claims, wherein the distance between the start position (300a-306a, 702a) and the end position (300b-306b, 702b) is an aggregate comprising a machine default set distance, an operator-adjusted start position and an operator-adjusted end position.

4. The method according to claim 3, wherein the package-specific data (400) comprises a length deviation of the package precursor (106), wherein the aggregate further comprises the length deviation, wherein the actuator (102) forms part of a sealing station (700) of the packaging machine (100), wherein the start position (702a) is a conveyor belt position and the end position (702b) is a sealing position in which the package precursor (106) is held in position while a transversal sealing (706) in a sealing section (704) of the package precursor (106) is formed.

5. The method according to claim 3 or 4, wherein the operator-adjusted start position and/or the operator-adjusted end position are restricted by an adjustment window (204, 206, 208), wherein the adjustment window defines a maximum allowed deviation from the start position and/or the end position.

6. The method according to any one of the preceding claims, wherein the package status (402) comprises information about whether the package precursor (106) is to be wasted.

7. The method according to claim 6, wherein the package precursor (106) is a blank of a web of packaging material, wherein the package status (402) is set to be wasted if the blank is provided with a weld (602) from an automatic splicing operation.

8. The method according to any one of the preceding claims, wherein the method further comprises
determining (S114) an intermediate position (308) on the motion axis,
wherein the step of defining (S108) the movement profile comprises
defining (S116) the movement profile based on the start and intermediate position into a first movement profile by scaling the movement profile from a positional perspective and a temporal perspective based on a distance between the start and the intermediate position,
defining (S118) the movement profile based on the intermediate and end position into a second movement profile by scaling the movement profile from the positional perspective and the temporal perspective based on a distance between the intermediate and the end position, and
combining (S120) the first and second movement profile into the package-adjusted movement profile.

9. The method according to claim 8, wherein the actuator is a servomotor arranged for picking up the package precursor (106) in the form of flat-folded sleeve of packaging material from a magazine in a pick-up position (P-U POS), transferring the flat-folded sleeve to a folding station in a folding position (F POS), and wasting the flat-folded sleeve in a waste position (W POS), wherein the waste position (W POS) is the intermediate position along the motion axis (M-A) placed between the pick-up position (P-U POS) and the folding position (F POS), wherein the package status (402) indicates whether the package precursor is to be transferred to the waste position (W POS) or transferred to the folding station (F POS).

10. The method according to any one of the preceding claims, wherein the package-specific data (400) comprises a unique identification of the package precursor (106) and the package is provided with a physical mark associated to the unique identification.

11. The method according to any one of the preceding claims, wherein the end position is a start position for a subsequent package precursor to be moved by the actuator (102).

12. The method according to claim 11, wherein the steps of obtaining (S102) the package-specific data (400), obtaining (S104) the start position (300a-306a), and defining (S108) the movement profile are performed for a sequence of package precursors (600) such that a plurality of movement profiles are generated and merged prior to the step of initiating (S112) the movement of the actuator (102).

13. The method according to any one of the preceding claims, wherein a time delay is provided between executing the step of defining (S108) the movement profile and the step of initiating (S112) the movement of actuator (102).

14. An apparatus (108) for operating an actuator (102) of a packaging machine (100) arranged to produce packages filled with food product (FP), wherein the actuator (102) is arranged to move a package precursor (106) between a number of positions along a motion axis (M-A) according to a movement profile (200), wherein the package precursor (106) is arranged to be formed into one of the packages in the packaging machine, the apparatus (108) comprising a control circuitry (110) configured to,
obtain package-specific data (400) associated with the package precursor (106) held in a database (112) communicatively connected to the packaging machine (100), wherein the package-specific data (400) comprises information about package status (402),
obtain a start position (300a-306a) on the motion axis (M-A),
determine an end position (300b-306b) on the motion axis (M-A) based on the package status (402),
define the movement profile based on the start and end position (300a-306a, 300b-306b) into a package precursor-adjusted movement profile by scaling the movement profile based on a distance between the start position and the end position, and
initiate a movement of the actuator (102) from the start position to the end position along the motion axis (M-A) in accordance with the package per-cursor-adjusted movement profile.

15. A computer program product comprising instructions which, when executed by a computing device, causes the computing device to carry out the method according any one of the claims 1 to 11.
